(19) Europäisches Patentamt
European Patent Office
Office européen des brevets

(11) **EP 4 703 435 A1**

(12) **EUROPEAN PATENT APPLICATION**
published in accordance with Art. 153(4) EPC

(43) Date of publication:
**04.03.2026 Bulletin 2026/10**

(21) Application number: **24797140.1**

(22) Date of filing: **25.04.2024**

(51) International Patent Classification (IPC):
**C08L 101/00** (2006.01)    **C08K 3/013** (2018.01)
**C08K 5/10** (2006.01)      **C08L 83/07** (2006.01)
**C09K 5/14** (2006.01)      **H01L 23/36** (2006.01)
**H01M 10/659** (2014.01)

(52) Cooperative Patent Classification (CPC):
Y02E 60/10

(86) International application number:
**PCT/JP2024/016306**

(87) International publication number:
**WO 2024/225395 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.04.2023 JP 2023074821**

(71) Applicants:
• **Sekisui Chemical Co., Ltd.
Osaka-shi, Osaka 530-8565 (JP)**

• **Sekisui Polymatech Co., Ltd.
Saitama-city, Saitama 338-0837 (JP)**

(72) Inventors:
• **KANEKO, Toshiki
Saitama-city, Saitama 338-0837 (JP)**
• **MIYAMOTO, Kensho
Saitama-city, Saitama 338-0837 (JP)**

(74) Representative: **Ter Meer Steinmeister & Partner
Patentanwälte mbB
Nymphenburger Straße 4
80335 München (DE)**

(54) **THERMALLY CONDUCTIVE MEMBER, THERMALLY CONDUCTIVE COMPOSITION, STRUCTURE, AND METHOD FOR REWORKING STRUCTURE**

(57)    Disclosed herein is a thermally conductive member containing a polymer matrix, a phase change material having a melting point of higher than 25°C and 120°C or lower, and a thermally conductive filler, wherein when the thermally conductive member is sandwiched between glass cloth films, compressed by 10%, and left to stand at 90°C for 40 hours, a weight loss ratio B of the thermally conductive member is 0.05% or more and 3.0% or less.

**EP 4 703 435 A1**

## Description

Technical Field

The present invention relates to a thermally conductive member, a thermally conductive composition, a structure, and a method for reworking a structure.

Background Art

A thermally conductive composition is filled between a heating element and a heat-dissipating element and then cured so as to be used as a thermally conductive member that transfers heat generated by the heating element to the heat-dissipating element. Such a thermally conductive composition can fill a gap between a heating element and a heat-dissipating element due to its fluidity and is therefore used as a thermally conductive spacer.

For example, Patent Literature 1 discloses, as a thermally conductive composition, a cross-linked rubber composition based on a room-temperature vulcanizing silicone elastomer and comprising at least one phase change material (PCM). According to Patent Literature 1, the cross-linked rubber composition has a shore A hardness of 20 to 90 and is incorporated in a thermal control or regulating system that can be used for passive air conditioning of a building, for warming a passenger compartment or an engine of a motor vehicle, an aircraft, or a spacecraft, or for warming submerged pipelines.

Citation List

Patent Literature

PTL1: JP 2014-28948 A

Summary of Invention

Technical Problem

In recent years, the use of a thermally conductive composition as a structure adhesive has been studied to efficiently cool lithium-ion batteries mounted in a motor vehicle in such a manner that the thermally conductive composition is provided between the batteries and a cooling plate.

Meanwhile, in the event of malfunction of batteries, the batteries and a cooling plate need to be separated for repair or exchange of the batteries. However, conventional thermally conductive compositions are excellent in heat resistance, and therefore once such a conventional thermally conductive composition adheres to members, its adhesive force is less likely to reduce, which may cause damage to the members due to a load exerted thereon when the members are separated from each other. Further, such separation of the members requires a considerable force, and therefore there is also a problem such that large-scale equipment and much effort are required.

Patent Literature 1 discloses that heat is released or absorbed via the phase change of PCM but does not disclose that the phase change of PCM is utilized to improve reworkability.

It is an object of the present invention to provide a thermally conductive member and a thermally conductive composition which can exhibit excellent reworkability even after adhesion. It is also an object of the present invention to provide a structure having excellent reworkability and a method for reworking a structure.

Solution to Problem

The present inventors have diligently studied and, as a result, have found that the above objects can be achieved by blending a phase change material having a melting point in a specific range into a thermally conductive member and adjusting, within a predetermined range, the weight loss ratio of the thermally conductive member at the time when the thermally conductive member is left to stand for a certain time under certain conditions, and this finding has led to the completion of the following invention.

Specifically, the present invention provides the following [1] to [15].

[1] A thermally conductive member comprising a polymer matrix, a phase change material having a melting point of higher than 25°C and 120°C or lower, and a thermally conductive filler, in a case of the thermally conductive member being sandwiched between glass cloth films, compressed by 10%, and left to stand at 90°C for 40 hours, a weight loss ratio B of the thermally conductive member being 0.05% or more and 3.0% or less.

[2] The thermally conductive member according to [1], wherein an elastic modulus G25 at 25°C and an elastic modulus G90 at 90°C satisfy a relationship represented by the following expression (1):

$$G25/G90 \geqq 1.2 \quad (1)$$

[3] The thermally conductive member according to [1] or [2], wherein the weight loss ratio B, the elastic modulus G25 at 25°C, and the elastic modulus G90 at 90°C satisfy a relationship represented by the following expression (2):

$$0.001 \leqq B/(G90/G25) \leqq 1.0 \quad (2)$$

[4] The thermally conductive member according to any one of [1] to [3], wherein the polymer matrix is a cured product of an organopolysiloxane.

[5] The thermally conductive member according to [4], wherein the cured product of an organopolysiloxane is a cured product of an addition reaction-type curable silicone.

[6] The thermally conductive member according to any one of [1] to [5], wherein the phase change material is an ester compound.

[7] The thermally conductive member according to [6], wherein the ester compound is a monoester having 12 or more and 44 or less carbon atoms.

[8] The thermally conductive member according to any one of [1] to [5], wherein the phase change material is a hydrocarbon compound.

[9] The thermally conductive member according to any one of [1] to [8], wherein a content of the phase change material is 10 parts by mass or more and 70 parts by mass or less per 100 parts by mass of the polymer matrix.

[10] A structure comprising a heating element, a heat-dissipating element, and a thermally conductive member that bonds the heating element and the heat-dissipating element together, the thermally conductive member comprising a polymer matrix, a phase change material having a melting point of higher than 25°C and 120°C or lower, and a thermally conductive filler, and in a case of the thermally conductive member being cut to have a size of 20 mm × 20 mm and a thickness of 2 mm, sandwiched between glass cloth films, compressed by 10%, and left to stand at 90°C for 40 hours, a weight loss ratio B of the thermally conductive member being 0.05% or more and 3.0% or less.

[11] The structure according to [10], wherein the heating element is a battery cell and the heat-dissipating element is a battery module case, a battery pack case, or a cooling plate.

[12] A structure comprising a heating element, a heat-dissipating element, and a thermally conductive member that bonds the heating element and the heat-dissipating element together, the thermally conductive member comprising a polymer matrix, a phase change material having a melting point of higher than 25°C and 120°C or lower, and a thermally conductive filler, an adhesive force between the heating element and the heat-dissipating element at 25°C being 0.05 MPa or more and 2.0 MPa or less, and a post-heating adhesive force between the heating element and the heat-dissipating element at 90°C being less than the adhesive force and equal to or less than 0.2 MPa.

[13] A thermally conductive composition comprising a liquid polymer being a precursor of a polymer matrix, a phase change material having a melting point of higher than 25°C and 120°C or lower, and a thermally conductive filler, in a case of a cured product of the thermally conductive composition being sandwiched between glass cloth films, compressed by 10%, and left to stand at 90°C for 40 hours, a weight loss ratio B of the cured product of the thermally conductive composition being 0.05% or more and 3.0% or less.

[14] The thermally conductive composition according to [13], comprising a combination of a first agent comprising a base resin comprising the liquid polymer, the phase change material having a melting point of higher than 25°C and 120°C or lower, and the thermally conductive filler and filled in a first container and a second agent comprising a curing agent comprising the liquid polymer, the phase change material having a melting point of higher than 25°C and 120°C or lower, and the thermally conductive filler and filled in a second container.

[15] A method for reworking a structure comprising a heating element, a heat-dissipating element, and a thermally conductive member disposed between the heating element and the heat-dissipating element, wherein the thermally conductive member comprises a polymer matrix, a phase change material having a melting point of higher than 25°C and 120°C or lower, and a thermally conductive filler, the method comprising heating the structure to a temperature equal to or higher than the melting point of the phase change material and then separating the heating element and the heat-dissipating element from each other.

Advantageous Effects of Invention

According to the present invention, it is possible to provide a thermally conductive member and a thermally conductive composition which can exhibit excellent reworkability even after adhesion. It is also possible to provide a structure having excellent reworkability and a method for reworking a structure.

Brief Description of Drawings

[Fig. 1] Fig. 1 is a schematic diagram of a sample for measuring a weight loss ratio B.
[Fig. 2] Fig. 2 is a schematic diagram of a tensile test sample for measuring an adhesive force.

Description of Embodiments

[Thermally Conductive Member]

A thermally conductive member of the present invention contains a polymer matrix, a phase change material having a melting point of higher than 25°C and 120°C or lower, and a thermally conductive filler. It should be noted that the thermally conductive member of the present invention can be obtained by curing a thermally conductive composition that will be described later.
The thermally conductive member of the present invention can exhibit excellent reworkability by heating it to a temperature equal to or higher than the melting point of the phase change material.
Further, the thermally conductive member of the present invention can also be configured such that, even when the thermally conductive member is temporarily heated to a temperature equal to or higher than the melting point of the phase change material in practical use, the phase change material re-solidifies when the temperature is reduced to a level equal to or lower than the melting point, so that the adhesive force is not substantially reduced as compared with that before heating

(Weight loss ratio)

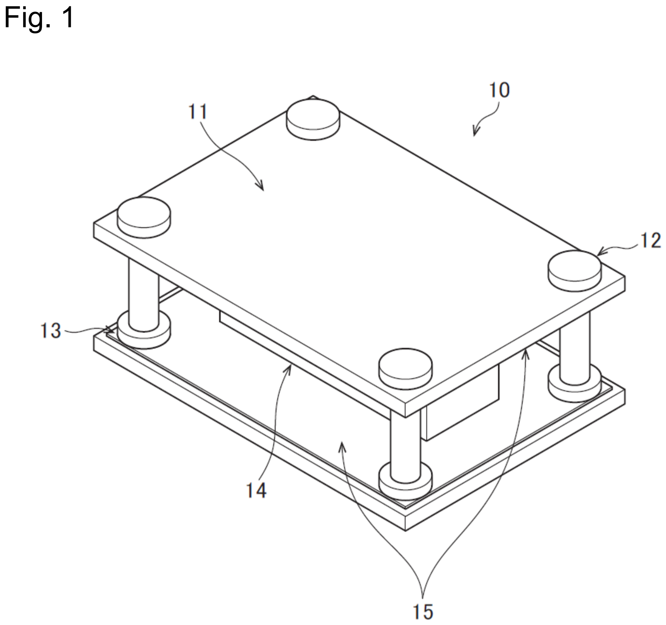

The weight loss ratio B of the thermally conductive member of the present invention at the time when the thermally conductive member is sandwiched between glass cloth films, compressed by 10%, and left to stand at 90°C for 40 hours (hereinafter also simply referred to as "weight loss ratio B") is 0.05% or more and 3.0% or less. When the weight loss ratio B is less than 0.05%, there is a fear that bleed-out of the liquefied phase change material is insufficient and thus the thermally conductive member cannot sufficiently exhibit reworkability after adhesion. On the other hand, when the weight loss ratio B exceeds 3.0%, there is a fear that bleed-out of the liquefied phase change material is excessive, and, for example, when the thermally conductive member is used for a structure that will be described later, a heat element and a heat-dissipating element can be contaminated, which can be a cause of a failure of these elements. From the above viewpoints, the weight loss ratio B is preferably 0.1% or more and 2.0% or less, more preferably 0.2% or more and 1.5% or less.
It should be noted that the weight loss ratio B can be adjusted to fall within a desired range by, for example, the type, melting point, and content of the phase change material.
The weight loss ratio B can be determined in the following manner.
As shown in Fig. 1, a sample 14 made of a thermally conductive member produced in each of examples and comparative examples is sandwiched between glass cloth films 15 attached to a compression jig 11 and is then compressed by 10% by tightening screws 12 fixed to a spacer 13 to obtain a measurement sample 10. Then, the measurement sample 10 is left to stand in an environment at 90°C for 40 hours.
After still standing, the measurement sample 10 is returned to room temperature (25°C). Then, the sample 14 is removed from the compression jig 11 to which the glass cloth films 15 have been attached, and the weight of the sample 14 is measured and defined as the weight of the sample 14 after still standing. Further, before the sample 14 is set in the compression jig 11, the weight of the sample 14 is measured and defined as the weight of the sample 14 before still standing. From the measured weight of the sample 14 before still standing and the measured weight of the sample 14 after still standing, the weight loss ratio B is calculated by the following formula.
Weight loss ratio B (%) = (Weight (g) of sample 14 before still standing - Weight (g) of sample 14 after still standing)/Weight (g) of sample 14 before still standing $\times$ 100

(Elastic Modulus)

The elastic modulus at 25°C (hereinafter referred to as "G25") and elastic modulus at 90°C (hereinafter referred to as "G90") of the thermally conductive member of the present invention preferably satisfy a relationship represented by the following expression (1):

$$G25/G90 \geqq 1.2 \quad (1)$$

When the ratio of G25 to G90 (G25/G90) is 1.2 or more, the elastic modulus of the thermally conductive member is significantly reduced by heating the thermally conductive member and thus excellent reworkability is likely to be exhibited. From this viewpoint, G25/G90 is more preferably 2.3 or more, even more preferably 4.5 or more. From the viewpoint of reworkability, the higher the G25/G90 is, the better. The upper limit of G25/G90 is not limited, but from the viewpoint that a certain mechanical strength is likely to be achieved even at high temperature and the viewpoint that the thermally conductive member is likely to have a certain or more adhesive force after temporarily heated and then cooled, the upper limit of G25/G90 is, for example, 40 or less, preferably 30 or less, more preferably 25 or less.

It should be noted that the elastic modulus of the present invention is herein a storage elastic modulus as measured using a rheometer under conditions of a strain of 1% and a frequency of 1 Hz. Specifically, G25 and G90 can be measured by a method described in Examples.

G90 is preferably 800000 Pa or less, more preferably 500000 Pa or less, even more preferably 300000 Pa or less. When G90 is equal to or less than the above upper limit, G25/G90 at or above a certain value is likely to be achieved and thus excellent reworkability is likely to be exhibited. From the viewpoint of reworkability, the lower G90 is, the better. The lower limit of G90 is not limited, but from the viewpoint of achieving a certain mechanical strength even at high temperature, the lower limit of G90 is, for example, 5000 Pa or more, preferably 10000 Pa or more, more preferably 15000 Pa or more.

G25 is preferably 40000 Pa or more, more preferably 50000 Pa or more, even more preferably 60000 Pa or more. When G25 is equal to or more than the above lower limit, G25/G90 at or above a certain value is likely to be achieved and thus excellent reworkability is likely to be exhibited. From the viewpoint that an appropriate adhesive force is likely to be imparted in an environment at 25°C, G25 is preferably 1000000 Pa or less, more preferably 950000 Pa or less, even more preferably 920000 Pa or less.

It should be noted that the elastic modulus described above can be adjusted to fall within their respective desired ranges by, for example, the type, melting point, and content of the phase change material or the type of the polymer matrix.

The weight loss ratio B, G25, and G90 of the thermally conductive member of the present invention preferably satisfy a relationship represented by the following expression (2).

$$0.001 \leqq B/(G90/G25) \leqq 1.0 \quad (2)$$

When the ratio of the weight loss ratio B to G90/G25 (B/(G90/G25)) is 0.001 or more, excellent reworkability is likely to be exhibited.

On the other hand, when B/(G90/G25) is 1.0 or less, for example, contamination of a heating element and a heat-dissipating element in a structure that will be described later is likely to be prevented when the thermally conductive member is used for the structure. Further, when B/(G90/G25) is 1.0 or less, G90/G25 is not excessively low, and therefore a reduction in the elastic modulus of the thermally conductive member upon heating is kept at or below a certain level and thus the thermally conductive member is likely to have a certain or more adhesive force after temporarily heated and then cooled.

From the above viewpoint, B/(G90/G25) is more preferably 0.002 or more and 0.5 or less, even more preferably 0.005 or more and 0.1 or less, even more preferably 0.011 or more and 0.05 or less.

(Thermal Conductivity)

The thermal conductivity of the thermally conductive member is preferably 1.0 W/m·K or more, more preferably 1.5 W/m·K or more, even more preferably 2.0 W/m·K or more. When the thermal conductivity is equal to or more than such a lower limit, excellent thermal conductivity is achieved. Therefore, when the thermally conductive member is used as, for example, a spacer for a battery cell module, heat generated by battery cells can efficiently be transferred to a module housing through the spacer and thus the temperature of the battery cells can be prevented from increasing excessively. The higher the thermal conductivity of the thermally conductive member is, the better. However, the thermal conductivity of the thermally conductive member is practically, for example, 15 W/m·K or less. It should be noted that the thermal conductivity is measured in accordance with ASTM D5470.

(Phase Change Material)

The thermally conductive member of the present invention contains a phase change material having a melting point of higher than 25°C and 120°C or lower. When the melting point of the phase change material is equal to or lower than 25°C, the adhesive force of the thermally conductive member may reduce when the thermally conductive member is practically used for, for example, a structure that will be described later. Further, there is also a fear that the phase change material bleeds out of the thermally conductive member and thus a heating element and a heat-dissipating element are contaminated with the phase change material, and such a risk increases particularly in summer. On the other hand, when the melting point exceeds 120°C, the thermally conductive member needs to be heated to a high temperature during rework, and such a high temperature during rework may cause failure of a heating element and a heat-dissipating element. For example, when the thermally conductive member provided in a lithium-ion battery is reworked, a high temperature during rework may cause failure of the lithium-ion battery.

From the above viewpoint, the melting point of the phase change material is preferably 30°C or higher and 100°C or lower, more preferably 40°C or higher and 85°C or lower, even more preferably 50°C or higher and 80°C or lower.

It should be noted that the melting point of the phase change material can be measured by increasing the temperature of a measurement sample at a temperature rise rate of 10°C/min using a differential scanning calorimeter (DSC) in such a manner as described in Examples. It should be noted that the melting point of the phase change material herein refers to a melting point as measured using a thermally conductive member that each phase change material is blended as a measurement sample.

The phase change material contained in the thermally conductive member of the present invention is preferably at least one selected from the group consisting of an ester compound or a hydrocarbon compound.

<Ester Compound>

The ester compound may be a monoester having one ester group or an ester having two or more ester groups such as a diester, but is preferably a monoester having 12 or more and 44 or less carbon atoms. The use of a monoester having a number of carbon atoms within the above range allows the phase change material to have a melting point within a predetermined range, which makes it possible to obtain a thermally conductive member having excellent reworkability. From such a viewpoint, the number of carbon atoms of the monoester is more preferably 15 or more and 44 or less, even more preferably 25 or more and 44 or less, still even more preferably 28 or more and 40 or less.

The ester compound is preferably an ester of a fatty acid and an alcohol.

The number of carbon atoms of the fatty acid is preferably 2 or more and 25 or less, more preferably 7 or more and 22 or less, even more preferably 12 or more and 18 or less. It should be noted that the number of carbon atoms of the fatty acid means the total number of carbon atoms including the carbonyl carbon of a carboxyl group.

The alcohol may be an alcohol having one hydroxyl group or an alcohol having two or more hydroxyl groups. The number of carbon atoms of the alcohol is preferably 2 or more and 25 or less, more preferably 4 or more and 22 or less, even more preferably 12 or more and 18 or less.

Among the above esters, the ester compound is preferably an ester of a monocarboxylic acid and an alcohol having one hydroxyl group.

Specific examples of the ester compound include stearyl stearate, pentaerythritol distearate, cetyl myristate, myristyl stearate, behenyl behenate, glycerol monostearyl ester, and ethylene glycol distearyl ester. Among these, at least one selected from the group consisting of stearyl stearate, cetyl myristate, or behenyl behenate is preferred. Above all, stearyl stearate is more preferred from the viewpoint that a melting point most suitable for rework of the thermally conductive member can be achieved.

These ester compounds may be used alone or in combination of two or more.

<Hydrocarbon Compound>

The hydrocarbon compound is not limited as long as its melting point is higher than 25°C and 120°C or lower, but is preferably an aliphatic hydrocarbon, more preferably paraffin, even more preferably a linear aliphatic hydrocarbon.

Examples of the linear aliphatic hydrocarbon include n-octadecane (melting point 28°C), n-nonadecane (melting point 32°C), n-eicosane (melting point 37°C), n-henicosane (melting point 40°C), n-docosane (melting point 44°C), n-tricosane (melting point 48 to 50°C), n-tetracosane (melting point 52°C), n-pentacosane (melting point 53 to 56°C), n-hexacosane (melting point 55 to 58°C), n-heptacosane (melting point 60°C), n-octacosane (melting point 62°C), n-nonacosane (melting point 63 to 66°C), n-triacontane (melting point 66°C), n-tetratriacontane (melting point 73°C), pentatriacontane (melting point 75°C), n-hexatriacontane (melting point 74 to 76°C), n-heptatriacontane (melting point 77 to 79°C), n-octatriacontane (melting point 77°C), n-nonatriacontane (melting point 80 to 82°C), n-tetracontane (melting point 81°C), and n-hentetracontane (melting point 74 to 76°C).

These hydrocarbon compounds may be used alone or as a mixture of two or more.

The thermally conductive member of the present invention preferably uses the ester compound as a phase change material. The ester compound shows relatively lower compatibility with the polymer matrix than the hydrocarbon compound. Therefore, when the thermally conductive member contains the ester compound as a phase change material, excellent reworkability is more likely to be imparted to the thermally conductive member because the ester compound is more likely to bleed out when the thermally conductive member is heated. Further, as compared to when the hydrocarbon compound is added, a predetermined amount of the ester compound can bleed out even when the amount of the ester compound added is smaller, which makes it easy to relatively increase the contents of other components. For example, when the content of the polymer matrix is increased, mechanical strength and adhesiveness are likely to be enhanced, and when the content of the thermally conductive filler is increased, thermal conductivity is likely to be enhanced.

The content of the phase change material is preferably 10 parts by mass or more and 70 parts by mass or less, more preferably 15 parts by mass or more and 70 parts by mass or less, even more preferably 20 parts by mass or more and 67 parts by mass or less per 100 parts by mass of the polymer matrix. When the content of the phase change material is equal to or more than the above lower limit, excellent reworkability is likely to be imparted to the thermally conductive member. On the other hand, when the content of the phase change material is equal to or less than the above upper limit, the amount of the phase change material that bleeds out during rework of the thermally conductive member is kept at or below a certain level, which makes it possible to prevent contamination of a heating element and a heat-dissipating element.

It should be noted that the phase change material may be contained in the thermally conductive member in a powdery state or in a state where the phase change material is compatibilized with the polymer matrix by adding the phase change material mixed with, for example, a compatibilizer, but the phase change material is preferably contained in the thermally conductive member in a powdery state.

The phase change material can be contained in the thermally conductive member in a powdery state by mixing it in a powdery state with a liquid polymer without dissolving it in a compatibilizer or the like. When the phase change material is contained in a powdery state, it is not necessary to use a compatibilizer, and therefore the content of the polymer matrix in the thermally conductive member can be increased, which allows the thermally conductive member to contain the phase change material without reducing the adhesiveness and mechanical strength of the thermally conductive member.

Further, when the phase change material needs to be contained in the thermally conductive member in a powdery state, it is preferred that a thermally conductive composition is prepared without heating it to a temperature equal to or higher than the melting point of the phase change material, and it is more preferred that a thermally conductive composition is prepared at a temperature lower by 10°C or more than the melting point of the phase change material. This is because an increase in the viscosity of the thermally conductive composition more than necessary is suppressed by preventing a powder of the phase change material from melting and because when the phase change material is contained in the thermally conductive member in a powdery state, adhesiveness is more likely to be enhanced as compared to when the phase change material is compatibilized with the entire polymer matrix.

(Polymer Matrix)

The thermally conductive member of the present invention contains a polymer matrix. The polymer matrix is obtained by curing a liquid polymer.

The liquid polymer is herein a polymer that is liquid at room temperature (25°C) and may be, for example, a raw material for obtaining a polymer matrix such as silicone rubber or a polyurethane resin.

The liquid polymer may be a non-reactive compound having no reactive group or a reactive compound having a reactive group. Examples of the reactive group include an alkenyl group, a hydrosilyl group, a hydroxyl group, and an isocyanate group.

Examples of the liquid polymer include an organopolysiloxane, a polyol, and a polyisocyanate. The liquid polymer may be composed of a single component or may be a mixture of two or more components. Among these, the liquid polymer is preferably an organopolysiloxane. That is, the polymer matrix constituting the thermally conductive member of the present invention is preferably a cured product of an organopolysiloxane. When an organopolysiloxane is used as a liquid polymer, the filling rate of the thermally conductive filler is likely to increase and thus the thermal conductivity of the thermally conductive member is likely to be enhanced.

The organopolysiloxane may be, for example, an organopolysiloxane having a reactive group or an organopolysiloxane having no reactive group, but is preferably an organopolysiloxane having a reactive group.

The organopolysiloxane having a reactive group is an organopolysiloxane having a reactive group capable of forming a cross-linking structure, and examples thereof include an addition reaction-curable silicone, a radical reaction-curable silicone, a condensation reaction-curable silicone, an ultraviolet- or electron beam-curable silicone, and a moisture curable silicone. Among these, the organopolysiloxane having a reactive group is preferably an addition reaction-curable silicone. That is, when the polymer matrix constituting the thermally conductive member of the present invention is a cured product of an organopolysiloxane, the cured product of an organopolysiloxane is preferably a cured product of an addition reaction-curable silicone.

The addition reaction-curable silicone is more preferably one containing an alkenyl group-containing organopolysiloxane (base resin) and a hydrogen organopolysiloxane (curing agent).

The alkenyl group-containing organopolysiloxane is preferably an organopolysiloxane having at least two alkenyl groups in one molecule. The alkenyl group is not particularly limited and may be, for example, one having 2 or more and 8 or less carbon atoms, and examples thereof include a vinyl group, an allyl group, a butenyl group, a pentenyl group, a hexenyl group, a heptenyl group, and an octenyl group. Alkenyl group-containing organopolysiloxanes may be used alone, or in combination of two or more.

The hydrogen organopolysiloxane is preferably a hydrogen organopolysiloxane having at least two hydrosilyl groups in one molecule. The hydrosilyl group means a hydrogen atom attached to a silicon atom (SiH group). Hydrogen organopolysiloxanes may be used alone, or in combination of two or more.

The addition reaction-curable silicone is cured by addition reaction to form a matrix made of silicone rubber. The silicone rubber is easily deformed by compression, and therefore a cured product formed of a thermally conductive composition of the present invention is easily interposed between a heating element and a heat-dissipating element.

(Thermally Conductive Filler)

The thermally conductive member of the present invention contains a thermally conductive filler. The thermally conductive filler contained in the thermally conductive member improves the thermal conductivity of the thermally conductive member.

Examples of the thermally conductive filler include a metal, a metal oxide, a metal nitride, a metal hydroxide, a carbon material, and a non-metal oxide, nitride, and carbide. The thermally conductive filler may be in the form of a spherical or amorphous powder. Examples of the metal as a thermally conductive filler include aluminum, copper, and nickel, examples of the metal oxide as a thermally conductive filler include aluminum oxide typified by alumina, magnesium oxide, and zinc oxide, and an example of the metal nitride as a thermally conductive filler is aluminum nitride. An example of the metal hydroxide is aluminum hydroxide. Examples of the carbon material include spherical graphite and diamond. An example of the non-metal oxide includes quartz, an example of the non-metal nitride includes boron nitride, and an example of the non-metal carbide includes silicon carbide. Among these thermally conductive fillers, aluminum oxide and aluminum hydroxide are preferred, and aluminum oxide and aluminum hydroxide are preferably used in combination.

The average particle diameter of the thermally conductive filler is preferably 0.1 $\mu$m or more and 200 $\mu$m or less, more preferably 0.3 $\mu$m or more and 100 $\mu$m or less, even more preferably 0.5 $\mu$m or more and 70 $\mu$m or less.

As the thermally conductive filler, a small-particle-diameter thermally conductive filler having an average particle diameter of 0.1 $\mu$m or more and 5 $\mu$m or less and a large-particle-diameter thermally conductive filler having an average particle diameter of more than 5 $\mu$m and 200 $\mu$m or less are preferably used in combination. The use of thermally conductive fillers different in average particle diameter makes it possible to increase a filling rate.

It should be noted that the average particle diameter of the thermally conductive filler can be measured by observation with an electron microscope or the like. More specifically, the average particle diameter of the thermally conductive filler can be determined by, for example, measuring the particle diameters of randomly selected 200 particles of the thermally conductive filler with an electron microscope or an optical microscope and calculating the average (arithmetic average) of them.

The content of the thermally conductive filler is preferably 100 parts by mass or more and 3000 parts by mass or less, more preferably 200 parts by mass or more and 2000 parts by mass or less, even more preferably 500 parts by mass or more and 1600 parts by mass or less per 100 parts by mass of the total amount of the polymer matrix and the phase change material.

When the content of the thermally conductive filler is equal to or more than the above lower limit, certain thermal conductivity can be imparted to the thermally conductive composition and the thermally conductive member. When the content of the thermally conductive filler is equal to or less than the above upper limit, the thermally conductive filler can appropriately be dispersed. Further, it is possible to prevent the viscosity of the thermally conductive composition from increasing excessively.

(Dispersant)

The thermally conductive member of the present invention may contain a dispersant. When the dispersant is contained, the thermally conductive filler is easily dispersed in the polymer matrix and thus excellent thermal conductivity is likely to be imparted to the thermally conductive member. The dispersant is preferably a silicon compound, more preferably at least one selected from the group consisting of an alkoxysilane compound or an alkoxysiloxane compound.

Examples of the alkoxysilane compound include methyltrimethoxysilane, dimethyldimethoxysilane, diethyldimethoxysilane, trimethylmethoxysilane, methyltriethoxysilane, dimethyldiethoxysilane, ethyltrimethoxysilane, n-propyltrimethoxysilane, di-n-propyldimethoxysilane, di-n-propyldiethoxysilane, isobutyltrimethoxysilane, isobutyltriethoxysilane, isobutyltrimethoxysilane, isobutyltriethoxysilane, n-hexyltrimethoxysilane, n-hexyltriethoxysilane, methyl cyclohexyl dimethoxysilane, methyl cyclohexyl diethoxysilane, n-octyltrimethoxysilane, n-octyltriethoxysilane, n-decyltrimethoxysilane, and n-decyltriethoxysilane. Among these, from the viewpoint of reducing the viscosity of the thermally conductive composition, n-decyltrimethoxysilane, dimethyldimethoxysilane, and n-octyltriethoxysilane are preferred, and n-decyltrimethoxysilane is more preferred.

Examples of the alkoxysiloxane compound include a methyl methoxy siloxane oligomer, a methyl phenyl methoxy siloxane oligomer, a methyl epoxy methoxy siloxane oligomer, a methyl mercapto methoxy siloxane oligomer, and a methyl acryloyl methoxy siloxane oligomer.

One or more dispersants may be used.

When a dispersant is used for the thermally conductive member, the content of the dispersant is preferably 0.1 parts by mass or more, more preferably 0.5 parts by mass or more and is preferably 5 parts by mass or less, more preferably 3 parts by mass or less, even more preferably 2 parts by mass or less per 100 parts by mass of the polymer matrix. When the content of the dispersant is equal to or more than such a lower limit, the thermally conductive filler is easily dispersed in the polymer matrix.

On the other hand, when the content of the dispersant is equal to or less than such an upper limit, a reduction in the heat resistance of the thermally conductive member can be prevented.

It should be noted that the dispersant, especially the alkoxysilane compound may function as a compatibilizer that will be described later. The alkoxysilane compound such as n-decyltrimethoxysilane is volatile, and therefore bubbles derived from the alkoxysilane compound may be generated in the thermally conductive member. However, generation of bubbles derived from the alkoxysilane compound is suppressed when the content of the dispersant is equal to or less than the above upper limit.

(Other Components)

The thermally conductive member of the present invention preferably contains a catalyst for curing the liquid polymer. For example, when the liquid polymer is an addition reaction-type curable silicone, an addition reaction catalyst such as a platinum catalyst can be used as a catalyst.

As described above, the thermally conductive member may contain a compatibilizer. The compatibilizer is not particularly limited as long as it is a compound compatible with the liquid polymer at room temperature (25°C), but is preferably an ester compound that is liquid at 25°C. The ester compound used as a compatibilizer may be a monoester or a diester but is preferably a monoester. The ester compound used as a compatibilizer may be, for example, an ester of a fatty acid such as a saturated fatty acid and an alcohol such as an alkanol, and examples thereof include octyl laurate, 1-methyl heptyl laurate, isopropyl myristate, 1-methyl heptyl myristate, and isopropyl palmitate.

The thermally conductive member may further contain an additive other than the components described above, and examples of such an additive include a flame retardant, an antioxidant, and a colorant.

[Thermally Conductive Composition]

A thermally conductive composition of the present invention contains a liquid polymer that is a precursor of a polymer matrix, a phase change material having a melting point of higher than 25°C and 120°C or lower, and a thermally conductive filler, and the thermally conductive member described above is obtained by curing the thermally conductive composition.

These components of the thermally conductive composition are as described above, and therefore a detailed description thereof will be omitted. It should be noted that the melting point of the phase change material is a melting point as measured using a cured product of the thermally conductive composition as a measurement sample. The content of each of the components in the thermally conductive composition is the same as that in the thermally conductive member except that it is based not on 100 parts by mass of the polymer matrix but on 100 parts by mass of the liquid polymer.

The thermally conductive composition of the present invention may further contain, in addition to the above components, various additives such as the dispersant, the catalyst, and the compatibilizer, which are described above.

When a cured product of the thermally conductive composition of the present invention is sandwiched between glass cloth films, compressed by 10%, and left to stand at 90°C for 40 hours, a weight loss ratio B of the cured product is 0.05% or more and 3.0% or less. When the weight loss ratio B is within the above range, the phase change material is prevented from bleeding out excessively and thus reworkability can be improved.

The weight loss ratio B is preferably 0.1% or more and 2.0% or less, more preferably 0.2% or more and 1.5% or less. The weight loss ratio of cured product of the thermally conductive composition can be determined by subjecting a cured product sample obtained by curing the thermally conductive composition to measurement in the same manner as in the measurement of weight loss ratio of the thermally conductive member. At this time, the cured product sample may be obtained by substantially completely curing the thermally conductive composition. For example, as will be described later in Examples, the thermally conductive composition may be cured by leaving it to stand at room temperature for a long time.

Further, G25, G90, the ratio of G25 to G90 (G25/G90), and the ratio of weight loss ratio B to G90/G25 [B/(G90/G25)] of cured product of the thermally conductive composition of the present invention are also the same as those of the thermally conductive member, and therefore a description thereof will be omitted.

(Viscosity)

The viscosity of the thermally conductive composition of the present invention as measured using a rheometer under conditions of a measurement temperature of 25°C and a shear rate of 0.1 (1/s) is preferably 400 Pa·s or more and 50000 Pa·s or less, more preferably 500 Pa·s or more and 30000 Pa·s or less, even more preferably 800 Pa·s or more and 100000 Pa·s or less. When the viscosity of the thermally conductive composition is equal to or more than the above lower limit, the thermally conductive composition can be prevented from dripping due to the too low viscosity. On the other hand, when the viscosity of the thermally conductive composition is equal to or less than the above upper limit, workability such as ease of application is likely to be enhanced.

(Adhesive Force)

When an initial adhesive force at the time when adherends are bonded together using the thermally conductive composition of the present invention is taken as 100%, an adhesive force after heating to 90°C (hereinafter also referred to as "post-heating adhesive force") is preferably 80% or less, more preferably 75% or less, even more preferably 40% or less.

It should be noted that the initial adhesive force is an adhesive force as measured at room temperature (25°C) using a sample obtained by bonding together specific adherends described in Examples with the thermally conductive composition being interposed between them and curing the thermally conductive composition. The post-heating adhesive force is an adhesive force as measured after heating the sample to 90°C.

When the ratio of the post-heating adhesive force to the initial adhesive force is equal to or less than the above upper limit, a reduction in adhesive force due to heating of the thermally conductive member is large and thus excellent reworkability is likely to be exhibited.

The post-heating adhesive force relative to the initial adhesive force taken as 100% is not particularly limited, but is preferably 3% or more, more preferably 5% or more, even more preferably 8% or more. When the post-heating adhesive force relative to the initial adhesive force taken as 100% is at or above a certain level, it is possible to prevent an adhesive force from diminishing significantly even in the case of use of the thermally conductive composition in a high-temperature environment. Further, a post-restoration adhesive force that will be described later is likely to be achieved at or above a certain level.

It should be noted that the initial adhesive force, the post-heating adhesive force, and a post-restoration adhesive force that will be described later can be measured by their respective methods described in Examples.

The initial adhesive force of the thermally conductive composition of the present invention is preferably 0.05 MPa or more, more preferably 0.08 MPa or more, even more preferably 0.1 MPa or more. When the initial adhesive force is equal to or more than the above lower limit, the thermally conductive member is likely to exhibit excellent adhesiveness.

The initial adhesive force is not particularly limited. However, from the viewpoint of appropriate control of the adhesive force of the thermally conductive member and excellent handleability, the initial adhesive force may be, for example, 2.0 MPa or less and is preferably 1.0 MPa or less, more preferably 0.5 MPa or less.

The post-heating adhesive force of the thermally conductive composition of the present invention is preferably 0.2 MPa or less, more preferably 0.15 MPa or less, even more preferably 0.07 MPa or less. When the post-heating adhesive force is equal to or less than the above upper limit, excellent reworkability is likely to be exhibited. Further, from the viewpoint that the thermally conductive member is likely to have a certain or more adhesive force after temporarily heated and then cooled, the post-heating adhesive force is preferably 0.003 MPa or more, more preferably 0.005 MPa or more, even more preferably 0.008 MPa or more. It should be noted that the post-heating adhesive force is an adhesive force in a heated temperature environment.

The ratio of the adhesive force after heating to 90°C and then cooling to 25°C (hereinafter also referred to as "post-restoration adhesive force") to the initial adhesive force (post-restoration adhesive force/initial adhesive force) of the thermally conductive composition of the present invention is preferably 0.7 or more, more preferably 1 or more, even more preferably 1.05 or more. When the post-restoration adhesive force/initial adhesive force is equal to or more than the above lower limit, the thermally conductive member can maintain an excellent adhesive force while having excellent reworkability even when heated to a high temperature during use of the thermally conductive member or the like.

The post-restoration adhesive force/initial adhesive force is not particularly limited. However, from the viewpoint of appropriate control of the adhesive force of the thermally conductive member and excellent handleability, the post-restoration adhesive force/initial adhesive force may be, for example, 1.7 or less and is preferably 1.4 or less.

It should be noted that the post-restoration adhesive force is preferably 0.05 MPa or more, more preferably 0.08 MPa or more, even more preferably 0.1 MPa or more. When the post-restoration adhesive force is equal to or more than the above lower limit, the thermally conductive member is likely to exhibit excellent adhesiveness. Further, from the viewpoint of appropriate control of the adhesive force of the thermally conductive member and excellent handleability, the upper limit of the post-restoration adhesive force may be 2.0 MPa or less and is preferably 1.0 MPa or less, more preferably 0.5 MPa or less.

The post-heating adhesive force and the post-restoration adhesive force are those at the time when a phase change material having a melting point of 85°C or less is used, but the post-heating adhesive force and post-restoration adhesive force of the thermally conductive member using a phase change material having a melting point of higher than 85°C and 120°C or less may be measured after heating to 130°C instead of 90°C.

(Type of Thermally Conductive Composition)

The thermally conductive composition of the present invention may be a one-component type or a two-component type that is a combination of a first agent and a second agent, but is preferably a two-component type from the viewpoint of storage stability.

The mass ratio between the first agent and the second agent (second agent/first agent) of the two-component type thermally conductive composition is preferably 1 or a value close to 1. Specifically, the mass ratio is preferably 0.9 or more and 1.1 or less, more preferably 0.95 or more and 1.05 or less. Such a mass ratio between the first agent and the second agent of 1 or a value close to 1 makes it easy to prepare the thermally conductive composition. Further, the viscosity ratio between the first agent and the second agent (second agent/first agent) of the two-component type thermally conductive composition is also preferably 1 or a value close to 1. Specifically, the viscosity ratio is preferably 0.5 or more and 2.0 or less, more preferably 0.8 or more and 1.2 or less. Such a viscosity ratio between the first agent and the second agent of 1 or a value close to 1 makes it easy to uniformly mix the thermally conductive composition.

When the above-described addition reaction-curable silicone containing an alkenyl group-containing organopolysiloxane (base resin) and a hydrogen organopolysiloxane (curing agent) is used in the two-component type thermally conductive composition, the first agent may contain the alkenyl group-containing organopolysiloxane (base resin) and the second agent may contain the hydrogen organopolysiloxane (curing agent).

It is preferred that an addition reaction catalyst is contained in the first agent and is not contained in the second agent. In this case, the first agent and the second agent are excellent in storage stability before being mixed, and a reaction can be promoted after mixing the first agent and the second agent to achieve quick curing and thus a thermally conductive member excellent in various physical properties can be obtained by curing. Although the reason for this is not clear, it is presumed that the addition reaction catalyst such as a platinum catalyst is coordinated with an alkenyl group that is an addition reaction site of the base resin and thus curing easily proceeds.

The phase change material may be contained in at least one of the first agent or the second agent, but is preferably contained in both the first agent and the second agent. When the phase change material is contained in both the first agent and the second agent, it is easy to uniformly disperse the phase change material in the polymer matrix.

The thermally conductive filler may be contained in at least one of the first agent or the second agent, but is preferably contained in both the first agent and the second agent. When the thermally conductive filler is contained in both the first agent and the second agent, the first agent and the second agent are easily mixed. Further, the mass ratio and viscosity ratio of the second agent to the first agent can be adjusted to 1 or a value close to 1 in production of the thermally conductive composition, and therefore the resulting two-component type thermally conductive composition is easy to use.

The second agent preferably contains an alkenyl group-containing organopolysiloxane. When the second agent contains not only a hydrogen organopolysiloxane as a curing agent but also an alkenyl group-containing organopolysiloxane as a base resin, the mass ratio and viscosity ratio of the second agent to the first agent is easily adjusted to 1 or a value close to 1 in production of the thermally conductive composition. On the other hand, it is preferred that the first agent does not contain a hydrogen organopolysiloxane as a curing agent.

The viscosity of each of the first agent and the second agent as measured using a rheometer under conditions of a measurement temperature of 25°C and a shear rate of 0.1 (1/s) is preferably 400 Pa·s or more and 50000 Pa·s or less, more preferably 500 Pa·s or more and 30000 Pa·s or less, even more preferably 800 Pa·s or more and 100000 Pa·s or more. When the viscosity of each of the first agent and the second agent is equal to or more than the above lower limit, dripping caused due to too low a viscosity can be prevented. On the other hand, when the viscosity of each of the first agent and the second agent is equal to or less than the above upper limit, workability such as ease of application is likely to be enhanced.

The first agent and the second agent are preferably stored separately in different containers such as syringes, cartridges, pails, or drums. When syringes are used, it is preferred that the first agent is filled and stored in a first syringe and the second agent is filled and stored in a second syringe. In this case, a dual syringe may be used in which the first syringe and the second syringe are arranged in parallel.

It should be noted that when syringes are used, a first syringe and a second syringe may respectively serve as a first container and a second container. As will be described later, the same applies when cartridges, pails, or drums are used.

When cartridges are used, it is preferred that the first agent is filled and stored in a first cartridge and the second agent is filled and stored in a second cartridge. Also in this case, a dual cartridge may be used in which the first cartridge and the second cartridge are arranged in parallel. When pails or drums are used, it is preferred that the first agent is filled and stored in a first pail or drum and the second agent is filled and stored in a second pail or drum.

When the first agent and the second agent are filled in syringes or cartridges, a thermally conductive member can be formed by curing a thermally conductive composition obtained by respectively discharging the first agent and the second agent from a first syringe or a first cartridge and a second syringe or a second cartridge and mixing them with a static mixer. When the first agent and the second agent are discharged, a certain shear force is generated and thus the first agent and the second agent can easily be discharged due to a reduction in viscosity. Further, an applied material formed by discharge is easily compressed and is therefore excellent in workability. For example, when a mixture of the first agent and the second agent is discharged between a heating element and a heat-dissipating element to form an applied material having a certain thickness, the applied material is easily spread thinly with a low load.

(Method for Producing Thermally Conductive Composition)

A method for producing the thermally conductive composition of the present invention is not particularly limited, but the thermally conductive composition of the present invention may be prepared by mixing a liquid polymer, a phase change material, and other optional components, such as additives, added when necessary. When a mixture is prepared, a publicly-known mixing method may appropriately be used. For example, a publicly-known kneader, kneading roll, or mixer may be used for mixing.

In the case of a two-component type, the thermally conductive composition may be obtained by mixing components constituting a first agent to prepare the first agent and mixing components constituting a second agent to prepare the second agent and then mixing the first agent and the second agent. When a compatibilizer is used, the phase change material may be dissolved in the compatibilizer and then mixed with other components.

The thermally conductive member of the present invention can be used for various purposes. For example, the thermally conductive member can be used for batteries, electronic devices, and semiconductor devices and is preferably used for batteries. When used for a battery, the thermally conductive member may be filled between battery cells, between a battery cell and a battery module case, between a battery cell and a battery pack case, between a battery cell and a cooling plate, between a battery module case and a cooling plate, or between a battery pack case and a cooling plate so that the thermally conductive member filled as a spacer is in close contact with the battery cells, the battery module case, the battery pack case, or the cooling plate. This allows the spacer between the battery cells to have the function of keeping the battery cells separate from each other.

The thermally conductive member filled as a spacer between a battery cell and a battery module case, between a battery cell and a battery pack case, or a between battery cell and a cooling plate is in close contact with both the battery cell and the battery module case, the battery pack case, or the cooling plate and has the function of transferring heat generated by the battery cell to the battery module case, the battery pack case, or the cooling plate.

When the thermally conductive member is used for a battery, the battery is preferably used for, but not particularly limited to, a motor vehicle, more preferably a motor vehicle loaded with lithium-ion batteries. The thermally conductive member of the present invention has excellent reworkability, and therefore when, for example, a battery mounted in the chassis of a motor vehicle needs to be repaired or exchanged, only the failed portion (e.g., only the failed battery module) can be removed without excessive load on battery cells, battery modules, and other peripheral parts. Further, large-scale equipment is not required for rework, which is advantageous also in terms of cost. Further, when the thermally conductive member is peeled off, it needs to be heated to some extent, but the thermally conductive member can be peeled off without heating it to a very high temperature. Therefore, the thermally conductive member can be peeled off without causing a problem for an electrolyte solution or the like of the battery due to high-temperature heat.

As described above, even when the thermally conductive member of the present invention is temporarily heated, the adhesive force thereof after cooling hardly reduces as compared to that before heating, and therefore a reduction in adhesive force can be prevented even when a battery or the like is temporarily heated to a high temperature during use.

[Structure]

The present invention also provides a structure including a heating element, a heat-dissipating element, and a thermally conductive member that bonds the heating element and the heat-dissipating element together. More specifically, the present invention provides two types of structures, that is, a structure according to a first embodiment and a structure according to a second embodiment that will be described below. It should be noted that in both the embodiments, the thermally conductive member included in the structure contains a polymer matrix, a phase change material having a melting point of higher than 25°C and 120°C or lower, and a thermally conductive filler.

(First Embodiment)

The first embodiment provides a structure including a thermally conductive member whose weight loss ratio B at the time when the thermally conductive member cut to have a size of 20 mm × 20 mm and a thickness of 2 mm is sandwiched between glass cloth films, compressed by 10%, and left to stand at 90°C for 40 hours is 0.05% or more and 3.0% or less.

(Second Embodiment)

The second embodiment provides a structure whose adhesive force between a heating element and a heat-dissipating element at 25°C is 0.05 MPa or more and 2.0 MPa or less and whose post-heating adhesive force between a heating element and a heat-dissipating element at 90°C is less than the adhesive force and equal to or less than 0.2 MPa.
It should be noted that the configuration of the thermally conductive member included in the structure according to the first embodiment and the structure according to the second embodiment is as described above, and therefore a detailed description thereof will be omitted.
The adhesive force between a heating element and a heat-dissipating element at 25°C and the post-heating adhesive force between a heating element and a heat-dissipating element at 90°C can respectively be measured in accordance with a method for measuring an adhesive force and a method for measuring a post-heating adhesive force described in Examples.
In the structure of the present invention, the heating element may be, for example, a battery cell or any one of various electronic parts used in electronic devices, such as a CPU, a power amplifier, and a power source and the heat-dissipating element may be, for example, a battery module case, a battery pack case, a cooling plate, a heat sink, a heat pump, or a metallic housing of an electronic device, but the heating element is preferably a battery cell and the heat-dissipating element is preferably a battery module case, a battery pack case, or a cooling plate. In the structure, the thermally conductive member may function as a spacer. When the heat-dissipating element is a battery module case or a battery pack case, the thermally conductive member may be disposed in the battery module case or the battery pack case.

[Rework Method]

The present invention also provides a method for reworking a structure including a heating element, a heat-dissipating element, and a thermally conductive member disposed between the heating element and the heat-dissipating element. The configurations of the thermally conductive member, the heating element, and the heat-dissipating element are as described above, and therefore a detailed description thereof will be omitted.
According to the present invention, the structure may be reworked by heating it to a temperature equal to or higher than the melting point of the phase change material and then separating the heating element and the heat-dissipating element from each other. A heating method is not particularly limited, but the structure may be heated by, for example, a thermostatic chamber, a far-infrared heating furnace, or hot air. When the heat-dissipating element has a structure in which a liquid such as cooling water or a cooling medium is circulated, the structure may be heated by circulating a liquid heated to a predetermined temperature. Among these methods, the method in which a liquid is circulated is preferred in that excessive heating of a battery can be prevented because the temperature control of the liquid is easy and heat is efficiently transferred to the structure.
According to the present invention, excellent reworkability can be exhibited by heating the structure to a temperature equal to or higher than the melting point of the phase change material. The principle thereof is not clear but is presumed as follows. The phase change material is converted to liquid form at a temperature equal to or higher than the melting point thereof, which makes it easy to peel off the thermally conductive member due to a reduction in the elastic modulus of the thermally conductive member and, in addition, the phase change material bleeds out of the polymer matrix and is therefore likely to localize at the interface between the thermally conductive member and an adherend and thus interface peeling off is likely to occur.

Examples

Hereinbelow, the present invention will be described in more detail with reference to examples, but the present invention is not limited to these examples.

[Viscosity]

The viscosities of a first agent and a second agent produced as a thermally conductive composition in each of examples and comparative examples were measured in the following manner.

The viscosity of each of the first agent and the second agent as a sample was measured using a rheometer at a shear rate of 0.1 (1/s). Specifically, the viscosity was measured using a rheometer MCR-302e equipped with φ 20 mm parallel plates and manufactured by Anton Paar after the sample was applied to a sample stage, a gap between the sample stage and the parallel plate was adjusted to 1.9 mm, the excessive sample protruding out of the parallel plates was trimmed, and the sample was left to stand at 25°C for 10 minutes.

[Weight loss ratio B]

A weight loss ratio B was calculated by the method described herein. It should be noted that fluorine resin-impregnated glass cloth ("FGF-400-2-300w" manufactured by Chukoh Chemical Industries, Ltd.) was used as glass cloth films, and a 160 mm × 120 mm stainless steel plate was used as a compression jig. As samples of a thermally conductive member, small pieces having a size of 20 mm × 20 mm and a thickness of 2 mm cut out of a block-shaped cured product having a thickness of 20 mm with a cutter were used. In each of examples and comparative examples, the same test was performed twice and an average of the two tests was determined.

[Elastic Modulus]

Each of the elastic modulus at 25°C and 90°C (G25, G90) of a thermally conductive member produced in each of examples and comparative examples was measured by the following measurement method.

The measurement was performed using a rheometer MCR-302e equipped with φ 20 mm parallel plates and manufactured by Anton Paar in the following manner. A 2 mm-thick sample of each of examples and comparative examples was set on a sample stage and compressed in such a manner that a gap between the parallel plate and the sample stage was 1.9 mm, the temperature of the sample was then controlled to be 25°C or 90°C by a Peltier plate, and the elastic modulus of the sample was measured under conditions of a strain of 1% and a frequency of 1 Hz.

Based on G25 and G90 measured above, a ratio of G25/G90 and a ratio of G90/G25 were calculated. In addition to G25 and G90, a ratio of B/(G90/G25) was also calculated based on the weight loss ratio B determined by the measurement described above.

[Adhesive Force]

The initial adhesive force, adhesive force after heating to 90°C (post-heating adhesive force), and adhesive force after heating to 90°C and then cooling to 25°C (post-restoration adhesive force) of a thermally conductive composition produced in each of examples and comparative examples were measured by their respective measurement methods described below.

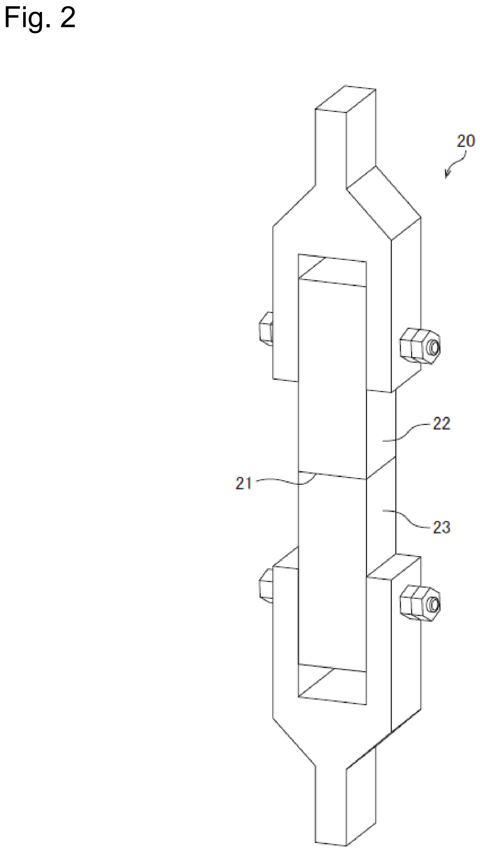

As shown in Fig. 2, a thermally conductive composition 21 produced in each of examples and comparative examples was applied to the 12.7 mm × 12.7 mm surface of an aluminum jig 22 having a thickness of 38.0 mm in such a manner that the thickness thereof after curing was 1.5 mm, the aluminum jig 22 to which the composition had been applied was then bonded to an aluminum jig 23 having the same shape as the aluminum jig 22, and in such a state, the composition was left to stand at 25°C for 24 hours for curing to obtain a measurement sample 20. It should be noted that curing conditions at this time are as described later (in the procedure of each of examples and comparative examples).

The initial adhesive force was measured by a tensile test using the above measurement sample in accordance with JIS K6849 in an environment at 25°C. The post-heating adhesive force was measured by a tensile test using the above measurement sample in accordance with JIS K6849 in an environment at 90°C. The post-restoration adhesive force was measured by heating the above measurement sample at 90°C for 30 minutes, leaving it to stand at 25°C for 60 minutes for cooling, and subjecting it to a tensile test in accordance with JIS K6849 in an environment at 25°C.

[Reworkability]

Reworkability was evaluated by observing the thermally conductive member in the above tensile test.

Specifically, reworkability was evaluated according to the following criteria after the tensile test was performed. The evaluation criteria are as follows.

(Evaluation Criteria)

Cohesive: Cohesive failure of the thermally conductive member occurred (part of the thermally conductive member remained in both the adherends) in the tensile test.
Interface: The thermally conductive member was peeled off from the adherends without the occurrence of cohesive failure of the thermally conductive member in the tensile test.
Components used in examples and comparative examples are as follows.

<Liquid Polymer>

· Silicone A agent: An alkenyl group-containing organopolysiloxane and a trace amount of an addition reaction catalyst (platinum catalyst) are contained.
· Silicone B agent: An alkenyl group-containing organopolysiloxane and a hydrogen organopolysiloxane are contained.

<Dispersant>

n-Decyltrimethoxysilane

<Silicone Oil>

· Dimethyl silicone oil (manufactured by Dow Toray Co., Ltd., trade name "SH-200", kinetic viscosity at 25°C 110 cSt)

<Phase Change Material>

The melting point of a phase change material was measured by weighing 20 mg of the phase change material in an aluminum cell and then heating the phase change material from 25°C to 100°C at a temperature rise rate of 10°C/min in an atmosphere of nitrogen with the use of DSC-60 manufactured by SHIMADZU CORPORATION. The melting point of a phase change material contained in a thermally conductive member was also measured in the same manner as described above after 100 mg of the thermally conductive member was weighed in an aluminum cell.

· Stearyl stearate: Melting point of stearyl stearate alone 62°C, Melting point of stearyl stearate contained in thermally conductive member 58°C, Number of carbon atoms 36
· Cetyl myristate: Melting point of cetyl myristate alone 55°C, Melting point of cetyl myristate contained in thermally conductive member 52°C, Number of carbon atoms 30
· Behenyl behenate: Melting point of behenyl behenate alone 75°C, Melting point of behenyl behenate contained in thermally conductive member 72°C, Number of carbon atoms 44
· Paraffin 1: Melting point of paraffin 1 alone 61°C, Melting point of paraffin 1 contained in thermally conductive member 60°C
· Paraffin 2: Melting point of paraffin 2 alone 71°C, Melting point of paraffine 2 contained in thermally conductive member 70°C

<Thermally Conductive Filler>

· Aluminum oxide: Spherical, Average particle diameter 40 μm
· Aluminum hydroxide: Amorphous, Average particle diameter 1 μm
· Aluminum hydroxide: Amorphous, Average particle diameter 10 μm
· Aluminum hydroxide: Amorphous, Average particle diameter 100 μm

[Examples 1 to 10, Comparative Examples 1 and 2]

A first agent and a second agent were prepared according to their respective formulations shown in Tables 1 to 3 and then mixed to obtain a thermally conductive composition. The obtained thermally conductive composition was left to stand at 25°C for 24 hours for curing to obtain a thermally conductive member.

The evaluation tests were performed using the first agent, the second agent, the thermally conductive composition, and the thermally conductive member obtained in each of Examples and Comparative Examples. The results are shown in Tables 1 to 3.

[Table 1]

| | | | Example 1 | | Example 2 | | Example 3 | | Example 4 | | Example 5 | |
|---|---|---|---|---|---|---|---|---|---|---|---|---|
| | | | First agent | Second agent | First agent | Second agent | First agent | Second agent | First agent | Second agent | First agent | Second agent |
| Formulation (parts by mass) | Liquid polymer | Silicone A | 80 | | 60 | | 80 | | 60 | | 80 | |
| | | Silicone B | | 80 | | 60 | | 80 | | 60 | | 80 |
| | Dispersant | n-Decyltrimethoxysilane | 1 | 1 | 1 | 1 | 1 | 1 | 1 | 1 | 1 | 1 |
| | Silicone oil | Dimethyl silicone oil (110 cP) | 0 | 0 | 0 | 0 | 0 | 0 | 0 | 0 | 0 | 0 |
| | Phase change material | Stearyl stearate | 20 | 20 | 40 | 40 | | | | | | |
| | | Cetyl myristate | | | | | 20 | 20 | 40 | 40 | | |
| | | Behenyl behenate | | | | | | | | | 20 | 20 |
| | | Paraffin 1 (Melting point=61°C) | | | | | | | | | | |
| | | Paraffin 2 (Melting point=71°C) | | | | | | | | | | |
| | Thermally conductive filler | Aluminum oxide (Spherical, 40 μm) | 280 | 280 | 280 | 280 | 280 | 280 | 280 | 280 | 280 | 280 |
| | | Aluminum hydroxide (Amorphous, 1 μm) | 84 | 84 | 84 | 84 | 84 | 84 | 84 | 84 | 84 | 84 |
| | | Aluminum hydroxide (Amorphous, 10 μm) | 112 | 112 | 112 | 112 | 112 | 112 | 112 | 112 | 112 | 112 |
| | | Aluminum hydroxide (Amorphous, 100 μm) | 186 | 186 | 186 | 186 | 186 | 186 | 186 | 186 | 186 | 186 |
| Melting point of phase change material | | | 62°C | | 62°C | | 55°C | | 55°C | | 75°C | |
| Melting point of phase change material contained in thermally conductive member | | | 58°C | | 58°C | | 52°C | | 52°C | | 72°C | |
| Blended amount of phase change material (parts by mass per 100 parts by mass of polymer matrix) | | | 20 | | 40 | | 20 | | 40 | | 20 | |
| Viscosity (Pa·S) | | | 828 | 721 | 5638 | 3972 | 1704 | 1348 | 3233 | 2390 | 1211 | 1087 |
| Bleed-out amount (Weight loss ratio B) | | | 1.27% | | 1.97% | | 0.65% | | 0.90% | | 0.26% | |
| Elastic modulus (Pa) (25°C) G25 | | | 323740 | | 498200 | | 437650 | | 449350 | | 119900 | |
| Elastic modulus (Pa) (90°C) G90 | | | 74768 | | 22077 | | 275840 | | 192680 | | 24131 | |
| G25/G90 | | | 4.3 | | 22.6 | | 1.6 | | 2.3 | | 5.0 | |
| Reduction in elastic modulus (25°C→90°C) G90/G25 | | | 23% | | 4% | | 63% | | 43% | | 20% | |
| B/ (G90/G25) | | | 0.055 | | 0.44 | | 0.010 | | 0.021 | | 0.013 | |
| Adhesive force at ordinary temperature (before heating) (MPa) (25°C) | | | 0.14 | | 0.12 | | 0.17 | | 0.16 | | 0.14 | |
| Post-heating adhesive force (MPa) (90°C) | | | 0.06 | | 0.03 | | 0.10 | | 0.06 | | 0.05 | |
| Post-restoration adhesive forceMPa) (90°C→25°C) | | | 0.17 | | 0.14 | | 0.23 | | 0.21 | | 0.15 | |
| Change in adhesive force (Post-heating adhesive force relative to initial value taken as 100%) | | | 44% | | 25% | | 60% | | 38% | | 37% | |
| Evaluation of reworkability | Peeling off mode (25°C) | | Cohesive | | Cohesive | | Cohesive | | Cohesive | | Cohesive | |
| | Peeling off mode (at 90°C) | | Interface | | Interface | | Interface | | Interface | | Interface | |
| | Peeling off mode (90°C→25°C) | | Cohesive | | Cohesive | | Cohesive | | Cohesive | | Cohesive | |

[Table 2]

| | | | Example 6 | | Example 7 | | Example 8 | | Example 9 | | Example 10 | |
|---|---|---|---|---|---|---|---|---|---|---|---|---|
| | | | First agent | Second agent | First agent | Second agent | First agent | Second agent | First agent | Second agent | First agent | Second agent |
| Formulation (parts by mass) | Liquid polymer | Silicone A | 60 | | 80 | | 60 | | 80 | | 60 | |
| | | Silicone B | | 60 | | 80 | | 60 | | 80 | | 60 |
| | Dispersant | n-Decyltrimethoxysilane | 1 | 1 | 1 | 1 | 1 | 1 | 1 | 1 | 1 | 1 |
| | Silicone oil | Dimethyl silicone oil (110 cP) | 0 | 0 | 0 | 0 | 0 | 0 | 0 | 0 | 0 | 0 |
| | Phase change material | Stearyl stearate | | | | | | | | | | |
| | | Cetyl myristate | | | | | | | | | | |
| | | Behenyl behenate | 40 | 40 | | | | | | | | |
| | | Paraffin 1 (Melting point=61°C) | | | 20 | 20 | 40 | 40 | | | | |
| | | Paraffin 2 (Melting point=71°C) | | | | | | | 20 | 20 | 40 | 40 |
| | Thermally conductive filler | Aluminum oxide (Spherical, 40 μm) | 280 | 280 | 280 | 280 | 280 | 280 | 280 | 280 | 280 | 280 |
| | | Aluminum hydroxide (Amorphous, 1 μm) | 84 | 84 | 84 | 84 | 84 | 84 | 84 | 84 | 84 | 84 |
| | | Aluminum hydroxide (Amorphous, 10 μm) | 112 | 112 | 112 | 112 | 112 | 112 | 112 | 112 | 112 | 112 |
| | | Aluminum hydroxide (Amorphous, 100 μm) | 186 | 186 | 186 | 186 | 186 | 186 | 186 | 186 | 186 | 186 |
| Melting point of phase change material | | | 75°C | | 61°C | | 61°C | | 71°C | | 71°C | |
| Melting point of phase change material contained in thermally conductive member | | | 72°C | | 60°C | | 60°C | | 70°C | | 70°C | |
| Blended amount of phase change material (parts by mass per 100 parts by mass of polymer matrix) | | | 40 | | 20 | | 40 | | 20 | | 40 | |
| Viscosity (Pa·S) | | | 4634 | 3200 | 1396 | 1388 | 9519 | 8124 | 1401 | 1359 | 9236 | 8397 |
| Bleed-out amount B (Weight loss ratio) | | | 0.31% | | 0.09% | | 0.19% | | 0.09% | | 0.20% | |
| Elastic modulus (Pa) (25°C) G25 | | | 911270 | | 95942 | | 185445 | | 67814 | | 191560 | |
| Elastic modulus (Pa) (90°C) G90 | | | 79748 | | 76448 | | 89983 | | 53578 | | 99255 | |
| G25/G90 | | | 11.4 | | 1.3 | | 2.1 | | 1.3 | | 1.9 | |
| Reduction in elastic modulus (25°C→90°C) G90/G25 | | | 9% | | 80% | | 49% | | 79% | | 52% | |
| B/ (G90/G25) | | | 0.035 | | 0.0011 | | 0.0039 | | 0.0011 | | 0.0039 | |
| Adhesive force at ordinary temperature (before heating) (MPa) (25°C) | | | 0.13 | | 0.14 | | 0.12 | | 0.14 | | 0.15 | |
| Post-heating adhesive force (MPa) (90°C) | | | 0.01 | | 0.08 | | 0.05 | | 0.10 | | 0.08 | |
| Post-restoration adhesive forceMPa) (90°C→25°C) | | | 0.14 | | 0.16 | | 0.14 | | 0.15 | | 0.17 | |
| Change in adhesive force (Post-heating adhesive force relative to initial value taken as 100%) | | | 11% | | 59% | | 52% | | 74% | | 51% | |
| Evaluation of reworkability | Peeling off mode (25°C) | | Cohesive | | Cohesive | | Cohesive | | Cohesive | | Cohesive | |
| | Peeling off mode (at 90°C) | | Interface | | Interface | | Interface | | Interface | | Interface | |
| | Peeling off mode (90°C→25°C) | | Cohesive | | Cohesive | | Cohesive | | Cohesive | | Cohesive | |

[Table 3]

| | | | Comparative Example 1 | | Comparative Example 2 | |
|---|---|---|---|---|---|---|
| | | | First agent | Second agent | First agent | Second agent |
| Formulation (parts by mass) | Liquid polymer | Silicone A | 100 | | 60 | |
| | | Silicone B | | 100 | | 60 |
| | Dispersant | n-Decyltrimethoxysilane | 1 | 1 | 1 | 1 |
| | Silicone oil | Dimethyl silicone oil (110 cP) | 0 | 0 | 40 | 40 |
| | Phase change material | Stearyl stearate | | | | |
| | | Cetyl myristate | | | | |
| | | Behenyl behenate | | | | |
| | | Paraffin 1 (Melting point=61°C) | | | | |
| | | Paraffin 2 (Melting point=71°C) | | | | |
| | Thermally conductive filler | Aluminum oxide (Spherical, 40 μm) | 280 | 280 | 280 | 280 |
| | | Aluminum hydroxide (Amorphous, 1 μm) | 84 | 84 | 84 | 84 |
| | | Aluminum hydroxide (Amorphous, 10 μm) | 112 | 112 | 112 | 112 |
| | | Aluminum hydroxide (Amorphous, 100 μm) | 186 | 186 | 186 | 186 |
| Melting point of phase change material | | | - | | - | |
| Melting point of phase change material contained in thermally conductive member | | | - | | - | |
| Blended amount of phase change material (parts by mass per 100 parts by mass of polymer matrix) | | | 0 | | 0 | |
| Viscosity (Pa·S) | | | 351 | 265 | 325 | 1398 |
| Bleed-out amount B (Weight loss ratio) | | | 0.07% | | 0.17% | |
| Elastic modulus (Pa) (25°C) G25 | | | 120740 | | 99770 | |
| Elastic modulus (Pa) (90°C) G90 | | | 127210 | | 103589 | |
| G25/G90 | | | 0.9 | | 1.0 | |
| Reduction in elastic modulus (25°C→90°C) G90/G25 | | | 105% | | 104% | |
| B/ (G90/G25) | | | 0.00066 | | 0.0016 | |
| Adhesive force at ordinary temperature (before heating) (MPa) (25°C) | | | 0.11 | | 0.14 | |
| Post-heating adhesive force (MPa) (90°C) | | | 0.09 | | 0.13 | |
| Post-restoration adhesive forceMPa) (90°C→25°C) | | | 0.12 | | 0.14 | |
| Change in adhesive force (Post-heating adhesive force relative to initial value taken as 100%) | | | 85% | | 91% | |
| Evaluation of reworkability | Peeling off mode (25°C) | | Cohesive | | Interface | |
| | Peeling off mode (at 90°C) | | Cohesive | | Interface | |
| | Peeling off mode (90°C→25°C) | | Cohesive | | Interface | |

As can be seen from the results shown above, the thermally conductive members produced in Examples had an excellent adhesive force in an ordinary temperature range (25°C) while exhibiting excellent reworkability upon heating due to a sufficient reduction in adhesive force.

On the other hand, the thermally conductive members produced in Comparative Examples could not exhibit excellent reworkability upon heating due to an insufficient reduction in adhesive force. Among these, the silicone oil-containing thermally conductive member produced in Comparative Example 2 did not exhibit a sufficient reduction in adhesive force due to a small change in elastic modulus while the bleed-out amount was at a certain level.

Reference Signs List

10 Sample for measuring weight loss ratio
11 Compression jig
12 Screw
13 Spacer
14 Sample
15 Glass cloth film
20 Sample for tensile test
21 Thermally conductive composition
22, 23 Aluminum jig

**Claims**

1. A thermally conductive member comprising a polymer matrix, a phase change material having a melting point of higher than 25°C and 120°C or lower, and a thermally conductive filler,
in a case of the thermally conductive member being sandwiched between glass cloth films, compressed by 10%, and left to stand at 90°C for 40 hours, a weight loss ratio B of the thermally conductive member being 0.05% or more and 3.0% or less.

2. The thermally conductive member according to claim 1, wherein an elastic modulus G25 at 25°C and an elastic modulus G90 at 90°C satisfy a relationship represented by the following expression (1):

$$G25/G90 \geqq 1.2 \quad (1)$$

3. The thermally conductive member according to claim 1 or 2, wherein the weight loss ratio B, the elastic modulus G25 at 25°C, and the elastic modulus G90 at 90°C satisfy a relationship represented by the following expression (2):

$$0.001 \leqq B/(G90/G25) \leqq 1.0 \quad (2)$$

4. The thermally conductive member according to claim 1 or 2, wherein the polymer matrix is a cured product of an organopolysiloxane.

5. The thermally conductive member according to claim 4, wherein the cured product of an organopolysiloxane is a cured product of an addition reaction-type curable silicone.

6. The thermally conductive member according to claim 1 or 2, wherein the phase change material is an ester compound.

7. The thermally conductive member according to claim 6, wherein the ester compound is a monoester having 12 or more and 44 or less carbon atoms.

8. The thermally conductive member according to claim 1 or 2, wherein the phase change material is a hydrocarbon compound.

9. The thermally conductive member according to claim 1 or 2, wherein a content of the phase change material is 10 parts by mass or more and 70 parts by mass or less per 100 parts by mass of the polymer matrix.

10. A structure comprising a heating element, a heat-dissipating element, and a thermally conductive member that bonds the heating element and the heat-dissipating element together,

the thermally conductive member comprising a polymer matrix, a phase change material having a melting point of higher than 25°C and 120°C or lower, and a thermally conductive filler, and

in a case of the thermally conductive member being cut to have a size of 20 mm × 20 mm and a thickness of 2 mm, sandwiched between glass cloth films, compressed by 10%, and left to stand at 90°C for 40 hours, a weight loss ratio B of the thermally conductive member being 0.05% or more and 3.0% or less.

11. The structure according to claim 10, wherein

the heating element is a battery cell and
the heat-dissipating element is a battery module case, a battery pack case, or a cooling plate.

12. A structure comprising a heating element, a heat-dissipating element, and a thermally conductive member that bonds the heating element and the heat-dissipating element together,

the thermally conductive member comprising a polymer matrix, a phase change material having a melting point of higher than 25°C and 120°C or lower, and a thermally conductive filler,
an adhesive force between the heating element and the heat-dissipating element at 25°C being 0.05 MPa or more and 2.0 MPa or less, and
a post-heating adhesive force between the heating element and the heat-dissipating element at 90°C being less than the adhesive force and equal to or less than 0.2 MPa.

13. A thermally conductive composition comprising a liquid polymer being a precursor of a polymer matrix, a phase change material having a melting point of higher than 25°C and 120°C or lower, and a thermally conductive filler, in a case of a cured product of the thermally conductive composition being sandwiched between glass cloth films, compressed by 10%, and left to stand at 90°C for 40 hours, a weight loss ratio B of the cured product of the thermally conductive composition being 0.05% or more and 3.0% or less.

14. The thermally conductive composition according to claim 13, comprising a combination of

a first agent comprising a base resin comprising the liquid polymer, the phase change material having a melting point of higher than 25°C and 120°C or lower, and the thermally conductive filler and filled in a first container, and
a second agent comprising a curing agent comprising the liquid polymer, the phase change material having a melting point of higher than 25°C and 120°C or lower, and the thermally conductive filler and filled in a second container.

15. A method for reworking a structure comprising a heating element, a heat-dissipating element, and a thermally conductive member disposed between the heating element and the heat-dissipating element,

the thermally conductive member comprises a polymer matrix, a phase change material having a melting point of higher than 25°C and 120°C or lower, and a thermally conductive filler,
the method comprising heating the structure to a temperature equal to or higher than the melting point of the phase change material and then separating the heating element and the heat-dissipating element from each other.

Fig. 1

Fig. 2

## INTERNATIONAL SEARCH REPORT

| | International application No. |
|---|---|
| | **PCT/JP2024/016306** |

| | |
|---|---|
| **A.** | **CLASSIFICATION OF SUBJECT MATTER** |

*C08L 101/00*(2006.01)i; *C08K 3/013*(2018.01)i; *C08K 5/10*(2006.01)i; *C08L 83/07*(2006.01)i; *C09K 5/14*(2006.01)i; *H01L 23/36*(2006.01)i; *H01M 10/659*(2014.01)i

FI: C08L101/00; C08K5/10; C08L83/07; H01L23/36 D; C09K5/14 E; H01M10/659; C08K3/013 ZAB

According to International Patent Classification (IPC) or to both national classification and IPC

| | |
|---|---|
| **B.** | **FIELDS SEARCHED** |

Minimum documentation searched (classification system followed by classification symbols)

C08L101/00; C08K3/013; C08K5/10; C08L83/07; C09K5/14; H01L23/36; H01M10/659

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | WO 2019/031458 A1 (DENKA CO., LTD.) 14 February 2019 (2019-02-14) claims, paragraphs [0020], [0032], example 10 | 1, 4-5, 8-9, 13-14 |
| A | | 2-3, 6-7, 10-12, 15 |
| Y | WO 2023/047869 A1 (SHIN-ETSU CHEMICAL CO., LTD.) 30 March 2023 (2023-03-30) claims, paragraphs [0020], [0039], [0043], [0056], [0060], example 5 | 1, 4-5, 8-9, 13-14 |
| A | | 2-3, 6-7, 10-12, 15 |
| A | WO 2022/215510 A1 (DOW TORAY CO., LTD.) 13 October 2022 (2022-10-13) claims, examples | 1-15 |
| A | WO 2022/070568 A1 (SEKISUI POLYMATECH CO., LTD.) 07 April 2022 (2022-04-07) claims, examples | 1-15 |
| A | JP 2014-28948 A (HUTCHINSON) 13 February 2014 (2014-02-13) claims 1, 6, 11, table 1 | 1-15 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 July 2024** | **23 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| International application No. |
| --- |
| **PCT/JP2024/016306** |

## C. DOCUMENTS CONSIDERED TO BE RELEVANT

| Category* | Citation of document, with indication, where appropriate, of the relevant passages | Relevant to claim No. |
| --- | --- | --- |
| A | WO 2016/185936 A1 (POLYMATECH JAPAN CO., LTD.) 24 November 2016 (2016-11-24) claims, examples | 1-15 |
| A | JP 2020-128463 A (SHIN-ETSU CHEMICAL CO., LTD.) 27 August 2020 (2020-08-27) paragraph [0012], examples | 1-15 |

Form PCT/ISA/210 (second sheet) (July 2022)

**INTERNATIONAL SEARCH REPORT**

International application No.

**PCT/JP2024/016306**

| Box No. III    Observations where unity of invention is lacking (Continuation of item 3 of first sheet) |

This International Searching Authority found multiple inventions in this international application, as follows:

Claims are classified into the following three inventions.
(Invention 1) Claims 1-11 and 13-14
　　Claims 1-11 and 13-14 have the special technical feature of "a thermally conductive member comprising a polymer matrix, a phase change material having a melting point of 25°C or more and 120°C or less, and a thermally conductive filler, wherein the thermally conductive member has a weight reduction rate B of 0.05% to 3.0% when the thermally conductive member is sandwiched between glass cloth films and left at 90°C for 40 hours under 10% compression," and are thus classified as invention 1.

(Invention 2) Claim 12
　　Claim 12 shares, with claim 1 classified as invention 1, the common technical feature in which a "thermally conductive member comprising a polymer matrix, a phase change material having a melting point of higher than 25°C and lower than or equal to 120°C, and a thermally conductive filler." However, said technical feature does not make a contribution over the prior art in light of the disclosure of JP 2014-28948 A (in particular, see table 1), and thus cannot be said to be a special technical feature. Also, there are no other the same as or corresponding special technical features between claim 12 and claim 1.
　　Also, claim 12 is not dependent on claim 1. Also, claim 12 is not substantially identical to or similarly closely related to any of the claims classified as invention 1.
　　Thus, claim 12 cannot be classified as invention 1.
　　In addition, claim 12 has the special technical feature of "a structure comprising a heat generating element, a heat dissipating element, and a thermally conductive member that fixes the heat generating element and the heat dissipating element, wherein the thermally conductive member comprises a polymer matrix, a phase change material having a melting point of higher than 25°C and lower than or equal to 120°C, and a thermally conductive filler, the adhesion strength between the heat generating element and the heat dissipating element at 25°C is 0.05 MPa and 2.0 MPa, and the adhesion strength after heating at 90°C is less than the adhesion strength and is also less than or equal to 0.2 MPa," and is thus classified as invention 3.

(Invention 3) Claim 15
　　Claim 15 shares, with claim 1 classified as invention 1 and claim 12 classified as invention 2, the common technical feature of a "thermally conductive member comprising a polymer matrix, a phase change material having a melting point of higher than 25°C and lower than or equal to 120°C, and a thermally conductive filler." However, said technical feature does not make a contribution over the prior art in light of the disclosure of JP 2014-28948 A (in particular, see table 1), and thus cannot be said to be a special technical feature. Also, there are no other same or corresponding special technical features between claim 15 and claim 1 or 12.
　　Also, claim 15 is not dependent on any of claim 1 or 12. Furthermore, claims 15 is not substantially identical to or similarly closely related to any of the claims classified as invention 1 or 2.
　　Thus, claim 15 cannot be classified as either invention 1 or 2.
　　Also, claim 15 has the special technical feature of "a method for reworking a structure comprising a heat generating element, a heat dissipating element, and a thermally conductive member disposed between the heat generating element and the heat dissipating element, the method being characterized in that the thermally conductive member comprises a polymer matrix, a phase change material having a melting point of higher than 25°C and lower than or equal to 120°C, and a thermally conductive filler, and the heat generating element and the heat dissipating element are separated after heating the structure to a temperature higher than the melting point of the phase change material," and are thus classified as invention 3.

Form PCT/ISA/210 (continuation of first sheet) (July 2022)

**INTERNATIONAL SEARCH REPORT**

International application No.

**PCT/JP2024/016306**

| Box No. III | Observations where unity of invention is lacking (Continuation of item 3 of first sheet) |
|---|---|

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

## INTERNATIONAL SEARCH REPORT
### Information on patent family members

International application No.

**PCT/JP2024/016306**

| Patent document cited in search report | | | Publication date (day/month/year) | Patent family member(s) | | | Publication date (day/month/year) |
|---|---|---|---|---|---|---|---|
| WO | 2019/031458 | A1 | 14 February 2019 | EP | 3667718 | A1 | |
| | | | | claims, paragraph [0018], example 10 | | | |
| | | | | CN | 110959190 | A | |
| WO | 2023/047869 | A1 | 30 March 2023 | TW | 202313807 | A | |
| WO | 2022/215510 | A1 | 13 October 2022 | EP | 4321572 | A1 | |
| | | | | claims, examples | | | |
| | | | | CN | 117203284 | A | |
| | | | | KR | 10-2023-0169195 | A | |
| | | | | TW | 202307172 | A | |
| WO | 2022/070568 | A1 | 07 April 2022 | US | 2023/0323181 | A1 | |
| | | | | claims, examples | | | |
| | | | | EP | 4225001 | A1 | |
| | | | | CN | 116075547 | A | |
| | | | | KR | 10-2023-0077716 | A | |
| | | | | TW | 202216881 | A | |
| JP | 2014-28948 | A | 13 February 2014 | US | 2014/0030458 | A1 | |
| | | | | claims 1, 8, 14, table 1 | | | |
| | | | | EP | 2690141 | A1 | |
| | | | | FR | 2993894 | A | |
| | | | | CN | 103571192 | A | |
| | | | | KR | 10-2014-0013920 | A | |
| | | | | MX | 2013008594 | A | |
| | | | | BR | 102013017724 | A | |
| WO | 2016/185936 | A1 | 24 November 2016 | (Family: none) | | | |
| JP | 2020-128463 | A | 27 August 2020 | US | 2022/0127500 | A1 | |
| | | | | paragraph [0017], examples | | | |
| | | | | EP | 3922454 | A1 | |
| | | | | EP | 4219643 | A1 | |
| | | | | CN | 113396055 | A | |
| | | | | KR | 10-2021-0127181 | A | |
| | | | | TW | 202031853 | A | |
| | | | | CN | 116622299 | A | |
| | | | | TW | 202346510 | A | |
| | | | | KR | 10-2024-0032152 | A | |

Form PCT/ISA/210 (patent family annex) (July 2022)

**EP 4 703 435 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014028948 A